## Europäisches Patentamt
## European Patent Office
## Office européen des brevets

(19)

(11) Publication number:

# 0 159 073
# B1

(12)

# EUROPEAN PATENT SPECIFICATION

(45) Date of publication of patent specification: **10.01.90**

(51) Int. Cl.⁵: **B 60 C 27/06,** B 60 C 27/08

(21) Application number: **85200453.0**

(22) Date of filing: **18.03.82**

(60) Publication number of the earlier application in accordance with Art. 76 EPC: **0 061 306**

(54) A traction sleeve for use in a tire chain.

(30) Priority: **23.03.81 US 246362**
**23.03.81 US 246363**

(43) Date of publication of application:
**23.10.85 Bulletin 85/43**

(45) Publication of the grant of the patent:
**10.01.90 Bulletin 90/02**

(84) Designated Contracting States:
**AT BE CH DE FR GB IT LI LU NL SE**

(56) References cited:
**WO-A-81/00539**
**FR-A- 512 940**
**GB-A- 753 016**
**US-A-1 349 149**
**US-A-1 802 653**
**US-A-3 025 901**
**US-A-3 683 990**

(73) Proprietor: **BURNS BROS., INC.**
**621 S.E. Union Avenue**
**Portland Oregon 97214 (US)**

(72) Inventor: **Coutts, James Walker**
**7 Platt Street**
**Swanton Vermont 05488 (US)**
Inventor: **Martinelli, Rene Joseph**
**1905 Hill House Drive**
**West Linn Oregon 97068 (US)**

(74) Representative: **Johnson, Terence Leslie et al**
**Edward Evans & Co. Chancery House 53-64**
**Chancery Lane**
**London WC2A 1SD (GB)**

Courier Press, Leamington Spa, England.

## Description

This invention relates to cable-type chains for use on vehicle tires, for improving traction, for example in ice or snow conditions. In particular, the invention is concerned with cable-type chains which include a pair of elongate flexible side members adapted to extend circumferentially around opposite side walls of a tire, and cross members provided with traction means such as traction sleeves, the cross members being connected between the side members so as to extend over and across the tire tread. Chains of this general type are well known; see, for example, U.S. Patent No. 4,155,389.

It is desirable in the design of cable-type tire chains, to maximize traction, vehicle stability and chain life, consistent with minimizing wear both of the tire and of the chain itself. The present invention is directed, inter alia, toward aspects of cable-type tire chain design adapted to provide the tire chain with favorable characteristics in the above or other respects.

For example, it may be desirable to provide attachment means between the ends of the cross members and the respective side members which are simple and economical to manufacture and apply, and which provide a relatively low profile connection between the cross members and side members, which is useful, for example, in vehicle wheel wells having limited clearance. It is further desirable, for such attachment means to provide a secure connection while facilitating cross member replacement, and preferably the attachment means should allow for a degree of movement (hinging movement being preferred), as between the cross member ends and the side members, in order to accommodate changes in tire profile and/or limited circumferential movement of the cross member.

Such tire chains often require traction devices, such as for example the tubular concave sleeve of WO—A—8100539. Such sleeves are liable to destruction through wear, and are prone to clogging with ice, so rendering their traction effect nugatory. The pre-characterising portion of claim 1 is defined in respect of WO—A—8100539.

It is accordingly an object of the invention to seek to overcome these disadvantages.

According to the invention there is provided a traction sleeve for use in a tire chain, comprising a body of tubular form and a notch in an end portion thereof which provides sharp corners characterized in that the body has at least two body portions in that one body portion comprises a right cylinder and in that one body portion comprises an end portion comprising an outwardly flared portion and defines said notch providing sharp corners on one end of the sleeve.

Preferably the sleeve is characterized by being formed from a strip of metal bent to provide said tubular right cylindrical portion and two outwardly flared opposite end portions by opposite edges of the strip being juxtaposed in said body portion of the sleeve in parallel to the sleeve axis, and by end sections of the edges defining notches in the flared end portion of the sleeves, respectively.

Additional features and advantages of the invention will be apparent from the ensuing description and claims taken in conjunction with the accompanying drawings.

Brief Description of the Drawings

Figure 1 is a perspective view of a vehicle tire equipped with a tire chain having a traction sleeve constructed in accordance with the invention;

Figure 2 is an enlarged sectional view on line 2—2 of Figure 1;

Figure 3 is an exploded perspective view of parts of the tire chain shown in Figure 1, including a cross member and a connector element;

Figure 4 is a side elevational view of the traction sleeve;

Figure 5 is an enlarged sectional view on line 5—5 of Figure 3; and

Figure 6 is an enlarged sectional view on line 6—6 of Figure 3.

Description of Preferred Embodiments

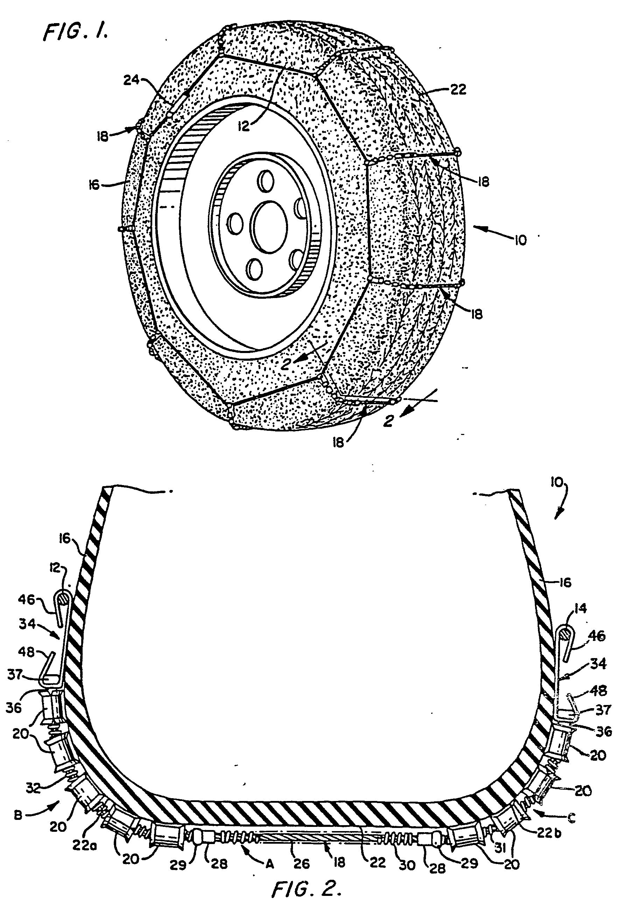

As shown in Figures 1 and 2, a vehicle tire 10 is provided with a cable-type tire chain comprising elongate flexible side members 12 and 14 (only one side member 12 is visible in Figure 1), which extend circumferentially around opposite side walls 16 of the tire, and cross members 18, carrying traction means in the form of traction sleeves 20 embodying the invention, the cross members being connected between the side members and extending over and across the tire tread 22. The opposite ends of the respective side members 12 and 14 may be connected together, in known manner, by any suitable connector 24 (Figure 1), so that the cable chain securely embraces the tire. Side members 12 and 14 may, for example, comprise stranded metal cable or other suitable elongated flexible material.

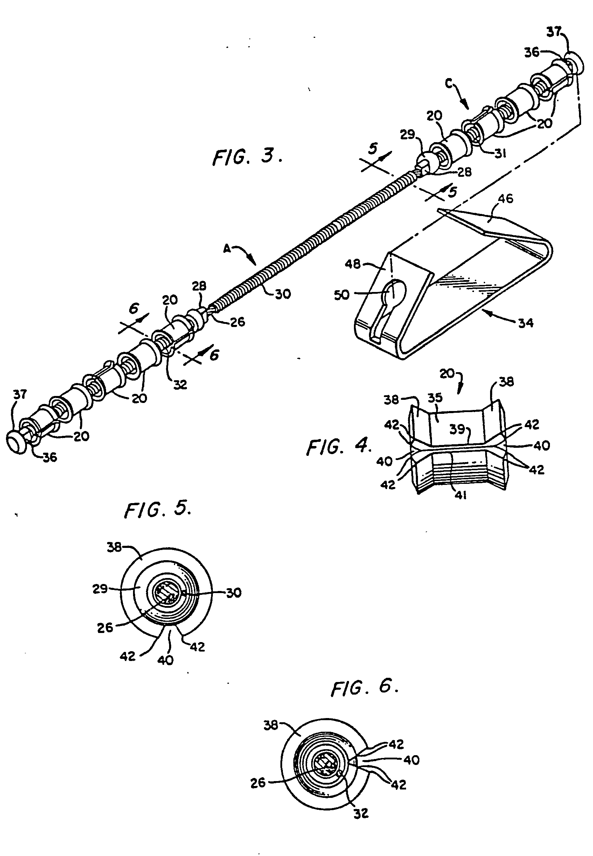

Each of the cross members 18, see particularly Figures 2 and 3, comprises a length of cable 26 (such as stranded-metal aircraft cable) divided, by bushings 28 crimped to the cable, into a central section A and outer sections B and C. A wire is helically wound around central section A so as to provided an elongate sheath 30 extending substantially the entire length of the central section. The diameter of the sheath is such that it can rotate freely on the cable 26. Outer sections B and C are likewise provided with freely rotatably helically wound elongate wire sheaths 32 and 31. Each end of the cross members has a connector element in the form of a further crimped-on bushing 36 with a part-spherical head 37. Each of the cable sections B and C carries a number of the traction sleeves 20, over the respective sheaths 32 and 34, the diameter of the sleeves 20 and the number of sleeves being such that they are freely rotatable.

The traction sleeves 20 (see Figure 4) each have a body portion 35 in the form of a right cylinder and outwardly flared end portions 38. The end portions define V-shaped notches 40 providing sharp corners 42 at the opposite ends of the sleeve for biting into ice, snow or the like. Bushings 28 have part-spherical heads 29, which may be received in the flared ends of the innermost sleeves and provide bearing surfaces which facilitate sleeve rotation. Conveniently, the sleeves may each be formed by bending (in a suitable die or the like) an initially flat strip of metal into tubular form with flared end portions and so that opposite edges 39, 41 of the strip are juxtaposed in the body portion of the sleeve in parallel to the sleeve axis. With this procedure, the flaring of the end portions in itself may form the V-shaped notches 40, which are defined between the end sections of edges 39 and 41.

It will be noted that the lengths of sections A, B and C of the cross members are such that when the tire chain is fitted to a tire, the traction sleeves 20 are located in the vicinity of the tread shoulders 22a and 22b, with the center of the tire tread being free of sleeves. This is preferred, but not essential, and, the sleeves could be continued across the entire tread. (In this case, bushings 28 could be omitted and a single wire sheath could be used for the entire length of each cross member.) Further, while in the illustrated embodiment, there are unequal numbers of traction sleeves 20 on the respective end portions of the cross member, the actual number of sleeves 20 used in practice may be varied to suit different applications.

The ends of the cross members 18 are connected to the side members 12 and 14 by attachment means including the bushings 36 and complementary connector elements 34 shown particularly in Figures 2 and 3. Each connector element 34 is formed from a flat metal plate having one end 46 bent to form a tab by which the element 34 is crimped firmly to the relevant side member. The other end of the element 34 is bent to form a further tab 48 having a keyhole-like opening 50, adapted to receive, through its large end, the head 37 of one of the end bushings 36 of the cross member when tab 48 is lifted away from the body of the element. The bushing 36 can then be moved down opening 50 toward the end of element 34. When tab 48 is then flattened toward the body of the plate, head 37 becomes trapped in element 34 as shown in Figure 2, the narrow part of opening 50 being of insufficient width to permit withdrawal of head 37, and the flattening of tab 48 preventing head 37 from moving toward the large end of opening 50. Th connector configuration, however, due, inter alia, to the part-spherical head 37, permits rotation of the cross member about its longitudinal axis. The cross member can be released by bending tab 48 to the position of Figure 3 (with the aid of a tool) and removing head 37 through the large end of opening 50.

The ability of the cross member cables 26 to rotate relative to the connector elements 34, along with the free rotational mounting of the wire sheaths 30—32 and of the traction sleeves, contributes significantly to reducing or at least equalizing wear on the cable chain. Additionally, the specific design of the traction sleeves 20 imparts good lateral traction to a tire, while resisting clogging by ice chips or the like. Further, the connector elements provide a rather low-profile connection between the cross members and the side members which is useful in vehicle wheel wells having limited clearance, and the connections may also permit a degree of lateral hinging as between the side members and the ends of the cross members useful in accommodating changes in tire profile.

The tire chain itself referred to herein is described and claimed in European Patent Application No. 82301392.5, to which cross-reference is made.

## Claims

1. A traction sleeve for use in a tire chain, comprising a body of tubular form and a notch in an end portion thereof which provides sharp corners, characterized in that the body has at least two body portions (35, 38), in that one body portion (35) comprises a right cylinder and in that one body portion comprises an end portion (38) comprising an outwardly flared portion and defines said notch (40) providing sharp corners (42) on one end of the sleeve.

2. A sleeve according to Claim 1, characterized by being formed from a strip of metal bent to provide said tubular right cylindrical portion (35) and two outwardly flared opposite end portions (38), by opposite edges (39, 41) of the strip being juxtaposed in said body portion (35) of the sleeve in parallel to the sleeve axis, and by end sections of the edges (39, 41) defining notches (40) in the flared end portions (38) of the sleeves, respectively.

## Patentansprüche

1. Traktionshülse zur Verwendung in einer Reifengleitschutzkette, mit einem Körper von rohrförmiger Gestalt und einer Kerbe in einem Endteil hievon, die scharfe Ecken vorsieht, dadurch gekennzeichnet, daß der Körper zumindest zwei Körperteile (35, 38) hat, daß ein Körperteil (35) einen geraden Zylinder umfaßt, und daß ein Körperteil einen Endteil (38) umfaßt, der einen sich auswärts erweiternden Teil aufweist und die Kerbe (40) definiert, die scharfe Ecken (42) an einem Ende der Hülse vorsieht.

2. Hülse nach Anspruch 1, gekennzeichnet durch die Bildung aus einem Metallband, das gebogen ist, um den rohrförmigen geraden zylindrischen Teil (35) und zwei sich auswärts erweiternde, gegenüberliegende Endteile (38) vorzusehen, durch gegenüberliegende Kanten (39, 41) des Bandes, die im Körperteil (35) der Hülse nahe beieinander parallel zur Hülsenachse angeordnet sind, und durch Endabschnitte der Kanten (39, 41), die jeweils Kerben (40) in den sich erweiternden Endteilen (38) der Hülsen definieren.

**Revendications**

1. Un manchon de traction destiné à être utilisé dans une chaîne pour pneumatique, comprenant un corps de forme tubulaire, pourvu dans une partie extrême d'une encoche créant des coins à bords vifs, caractérisé en ce que le corps comporte au moins deux parties (35, 38), en ce qu'une partie de corps (35) comprend un cylindre droit et en ce qu'une partie de corps comprend une portion extrême comprenant une partie évasée vers l'extérieur et définit ladite encoche (40) créant des coins à bords vifs (42) à une extrémité du manchon.

2. Un manchon selon la revendication 1, caractérisé en ce qu'il est formé à partir d'une bande de métal pliée pour créer ladite partie cylindrique droite tubulaire (35) et deux parties extrêmes (38) opposées et évasées vers l'extérieur, en ce que des bords opposés (39, 41) de la bande sont juxtaposés dans ladite partie de corps (35) du manchon en étant disposés parallèlement à l'axe du manchon et en ce que des sections extrêmes des bords (39, 41) définissent des encoches (40) respectivement dans les parties extrêmes évasées (38) du manchon.

FIG. 1.

FIG. 2.

FIG. 3.

FIG. 4.

FIG. 5.

FIG. 6.